Europäisches Patentamt

European Patent Office

Office européen des brevets

(19)

(11) Numéro de publication: **0 267 117**
**B1**

(12) **FASCICULE DE BREVET EUROPEEN**

(45) Date de publication du fascicule du brevet: **23.01.91**

(51) Int. Cl.[5]: **B 23 Q 3/10, B 23 Q 3/06**

(21) Numéro de dépôt: **87402488.8**

(22) Date de dépôt: **04.11.87**

(54) Système pour le bridage de pièces et installation pour la réalisation d'opérations sur lesdites pièces.

(30) Priorité: **06.11.86 FR 8615480**

(43) Date de publication de la demande:
**11.05.88 Bulletin 88/19**

(45) Mention de la délivrance du brevet:
**23.01.91 Bulletin 91/04**

(84) Etats contractants désignés:
**CH DE GB IT LI NL SE**

(56) Documents cités:
EP-A-0 116 977      DE-A-3 341 542
EP-A-0 117 557      DE-A-3 410 359
EP-A-0 133 634      DE-C-3 521 285
BE-A- 897 462       US-A-3 352 019
DE-A-3 309 555      US-A-4 174 828

PATENT ABSTRACTS OF JAPAN, vol. 9, no. 179
(M-399)1902r, 24 juillet 1985; & JP-A-60 48 224
(HITACHI SEISAKUSHO K.K.) 15-03-1985
TOOLING & PRODUCTION, vol. 51, no. 11,
Février 1986, pages 42-45, Solon, Ohio, US; P.C
MILLER: "Modular components build fixtures
fast"

(73) Titulaire: **AEROSPATIALE SOCIETE NATIONALE
INDUSTRIELLE Société Anonyme dite:**
**37, Boulevard de Montmorency**
**F-75016 Paris (FR)**

(72) Inventeur: **André, Joel**
**60 Quai Boissy d'Anglas**
**F-78380 Bougival (FR)**
Inventeur: **Massonnat, Jean-Louis**
**48 rue de Paris**
**F-92100 Boulogne (FR)**

(74) Mandataire: **Bonnetat, Christian et al**
**CABINET BONNETAT 23, Rue de Léningrad**
**F-75008 Paris (FR)**

Courier Press, Leamington Spa, England.

## Description

La présente invention concerne un système pour le bridage de pièces sur un support, ainsi qu'une installation pour la réalisation d'opérations, par exemple mécaniques, sur lesdites pièces.

Le terme "opérations mécaniques" désigne aussi bien des opérations d'assemblage ou de liaison entre au moins deux pièces, que des opérations d'usinage, de soudage ou de traitements en général, réalisées sur les pièces elles-mêmes.

Dans l'industrie, la réalisation de ces opérations mécaniques nécessite notamment l'utilisation de systèmes de bridage destinés à fixer lesdites pièces convenablement à des supports, tels que par exemple des tables de travail de machines-outils, afin de pouvoir exécuter lesdites opérations.

Paradoxalement, alors que ces dernières sont effectuées de plus en plus automatiquement à l'aide par exemple de robots ou de machines à commande numérique, dans le but d'accroître la productivité et la qualité des pièces ainsi obtenues, les systèmes de bridage actuellement utilisés exigent le plus souvent des manipulations et des interventions manuelles effectuées par des opérateurs. Ces interventions, consistant notamment en vissage et dévissage d'écrous ou analogues, en assemblage et réglage d'éléments entre eux, en positionnement desdites pièces, entraînent par conséquent une augmentation du temps de fabrication et des coûts de production.

Cependant, par le document EP-A-0 116 977, on connaît déjà un système pour le bridage de pièces sur un support, comprenant une pluralité d'embases destinées à être disposées entre ledit support et au moins une desdites pièces, chaque embase comportant des moyens pour la solidarisation d'au moins un élément actif spécifique destiné au bridage de ladite pièce, et des moyens identiques pour toutes lesdites embases et susceptibles de coopérer avec des moyens de préhension automatiques, en vue de rendre possible le transfert de chaque embase, des moyens de fixation amovible et automatique étant prévus entre ledit support et lesdites embases, lesdits moyens de fixation amovible et automatique comprenant au moins une broche liée à chaque embase, susceptible de s'introduire dans un trou de passage ménagé dans ledit support, ladite broche comportant des moyens de verrouillage-déverrouillage de l'embase audit support.

La présente invention a pour objet de perfectionner un système de ce type, de façon à permettre d'automatiser aisément les différentes interventions mentionnées ci-dessus. Le système de l'invention est alors particulièrement approprié à des ateliers flexibles de fabrication.

A cette fin, selon l'invention, le système de bridage de pièces du type rappelé ci-dessus, est caractérisé en ce que lesdits moyens de verrouillage-déverrouillage comportent au moins une bille logée dans ladite broche, et apte à être déplacée par une tige montée coulissante dans ladite broche, grâce auxdits moyens de préhension automatiques agissant sur ladite tige.

Ainsi, grâce à l'invention, il suffit de choisir parmi une pluralité d'embases identiques, sur lesquelles sont préalablement solidarisés des éléments actifs spécifiques et qui sont maintenues disponibles par exemple dans un magasin de stockage, celles nécessaires au bridage desdites pièces par l'intermédiaire desdits éléments actifs, de saisir par lesdits moyens de préhension automatiques lesdites embases choisies, de transférer celles-ci vers ledit support, puis de fixer, par l'intermédiaire des moyens de fixation amovible et automatique, lesdites embases audit support pour effectuer le bridage desdites pièces, dans lesquelles on souhaite réaliser les opérations, notamment mécaniques, prévues dans la gamme de fabrication. Lesdits moyens de fixation amovible et automatique étant commandés par lesdits moyens de préhension automatiques, il en résulte que, non seulement la prise et le transfert desdites embases, mais également la fixation de celles-ci audit support, sont effectués automatiquement. On obtient donc, selon l'invention, un système pour le bridage de pièces sur un support totalement automatisé.

Afin de pouvoir être saisis et maintenus par lesdits moyens de préhension automatique, lesdits moyens de chaque embase, susceptibles de coopérer avec ces moyens de préhension, sont constitués par une tête d'embase. Dans une forme préférée de réalisation, ladite tête peut comporter deux rainures ménagées de part et d'autre de celle-ci, et dans lesquelles sont susceptibles de venir s'engager lesdits moyens de préhension automatiques.

Chaque embase, bien qu'elle soit fixée par la liaison constituée par la broche à billes et par le trou de passage audit support, pourrait malgré tout pivoter autour de l'axe commun à la broche et au trou.

Pour éviter cela, chaque embase comporte avantageusement des moyens de positionnement de celle-ci sur ledit support, afin de l'immobiliser complètement. Dans une forme préférée de réalisation, lesdits moyens de positionnement peuvent être constitués par un doigt d'indexage susceptible de s'introduire dans un trou de passage prévu dans ledit support.

Avantageusement, lesdits trous de passage prévus dans le support, et respectivement destinés à recevoir lesdites broches et les doigts d'indexage desdites embases, sont de forme et de dimension identiques. Ainsi, lesdites embases peuvent être positionnées sur le support selon diverses possibilités d'orientation.

Selon une autre caractéristique de l'invention, lesdits éléments actifs spécifiques montés solidaires desdites embases sont susceptibles d'être reliés à des moyens de commande par l'intermédiaire de moyens de liaison prévus dans lesdites embases. Ainsi, les pièces préalablement disposées sur le support, par voies manuelle ou automatique, sont automatiquement bridées par les éléments actifs spécifiques reliés auxdits moyens de commande.

De plus, simultanément à la fixation de chaque embase audit support, est établie la connexion, par lesdits moyens de liaison, entre lesdits moyens de commande et ledit élément actif spécifique.

Dans un mode préféré de réalisation, lesdits moyens de liaison prévus dans chaque embase peuvent comporter au moins un canal destiné à relier au moins une ligne de puissance issue desdits moyens de commande, et connectée à un orifice ménagé dans ledit support, audit élément actif spécifique.

La présente invention concerne également une installation pour la réalisation d'opérations sur des pièces, pourvue du système de bridage de pièces spécifié ci-dessus et comportant une pluralité de supports, ainsi que lesdits moyens de préhension automatiques, ladite installation étant caractérisée en ce qu'elle comporte des moyens de commande desdits éléments actifs spécifiques, et des moyens de préhension automatiques susceptibles de rendre possible le transfert desdites embases.

Ainsi, en fonction des gammes de fabrication desdites pièces, on réalise, selon l'invention, une installation de plusieurs supports avec lesquels sont susceptibles de coopérer une pluralité d'embases portant des éléments actifs préalablement choisis pour les opérations mentionnées dans les gammes, et destinés au bridage desdites pièces sur lesdits supports, le transfert des ensembles constitués chacun d'une embase et d'un élément actif s'effectuant par lesdits moyens de préhension automatiques.

Bien évidemment, ces transferts peuvent être effectués d'un magasin de stockage, où sont entreposées les embases portant les éléments actifs, auxdits supports, d'un support à un autre support, ou encore des supports audit magasin de stockage.

Ce type d'installation est particulièrement adapté à la conception et la mise en place d'ateliers flexibles de fabrication, et évite ainsi, par sa souplesse d'emploi, l'utilisation d'outillages spécifiques nécessaires par phase et par poste de fabrication.

Selon une autre caractéristique, lesdits moyens de préhension automatiques commandent lesdits moyens de fixation amovible et automatique. Ainsi, on peut automatiser aussi bien le transfert que la fixation des embases sur lesdits supports. Dans une forme préférée de réalisation, ces derniers sont déplaçables et orientables dans l'espace. De ce fait, on peut aménager la disposition des supports en fonction des postes de travail agencés dans l'atelier flexible de fabrication.

De plus, chaque support peut être constitué de plusieurs modules sur lesquels sont susceptibles d'être disposées des embases portant des éléments actifs. En fonction des gammes de fabrication des pièces, on peut ainsi préparer des modules avec les embases et éléments actifs nécessaires aux opérations prévues dans les gammes de fabrication. Dans ce cas, on effectue alors automatiquement des changements ou transferts de modules.

Les figures du dessin annexé feront bien comprendre comment l'invention peut être réalisée. Des références identiques désignent des éléments semblables.

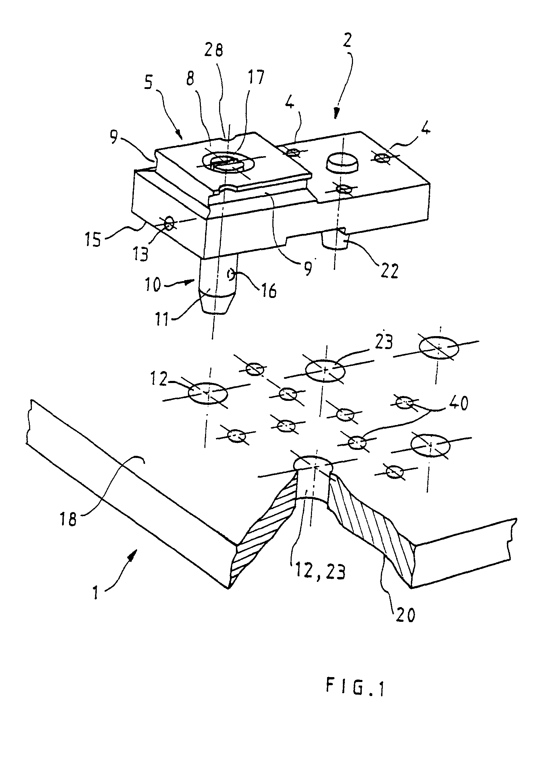

La figure 1 représente une vue en perspective éclatée d'une embase et d'un support, selon l'invention, susceptibles de coopérer l'un avec l'autre.

La figure 2 montre une coupe de l'embase fixée audit support.

La figure 3 est une vue en coupe selon la ligne III-III de la figure 2 montrant partiellement les moyens de préhension automatiques.

Les figures 4 et 5 sont, respectivement, une vue de dessus de l'embase et une vue en coupe selon la ligne V-V de la figure 4, montrant un mode de réalisation des moyens de liaison susceptibles de mettre en communication un élément actif à des moyens de commande.

Les figures 6, 7 et 8 montrent divers exemples de réalisation d'éléments actifs spécifiques solidarisés de l'embase.

Les figures 9 et 10 représentent une vue de face et une vue de côté d'un mode de réalisation particulier dudit support.

La figure 11 montre partiellement l'agencement des trous de passage et des orifices ménagés dans ledit support.

La figure 12 est une vue en perspective arrière dudit support auquel sont connectées les lignes de puissance issues des moyens de commande susceptibles d'alimenter les éléments actifs solidaires des embases.

La figure 13 représente une vue en perspective d'un exemple d'opération mécanique effectuée sur une pièce bridée audit support par des systèmes de bridage selon l'invention.

Selon l'invention, le système pour le bridage de pièces sur un support 1 comprend une pluralité d'embases 2, identiques, destinées à être disposées entre le support 1 et au moins une pièce, non représentée, sur laquelle on souhaite réaliser au moins une opération mécanique et/ou un traitement en général. Par souci de clarté, une seule embase 2 a été représentée sur la figure, mais il est bien évident que chaque embase comporte les mêmes caractéristiques telles que décrites ci-dessous. L'embase est, par exemple, de forme générale parallélépipèdique et est réalisée dans un matériau en alliage léger.

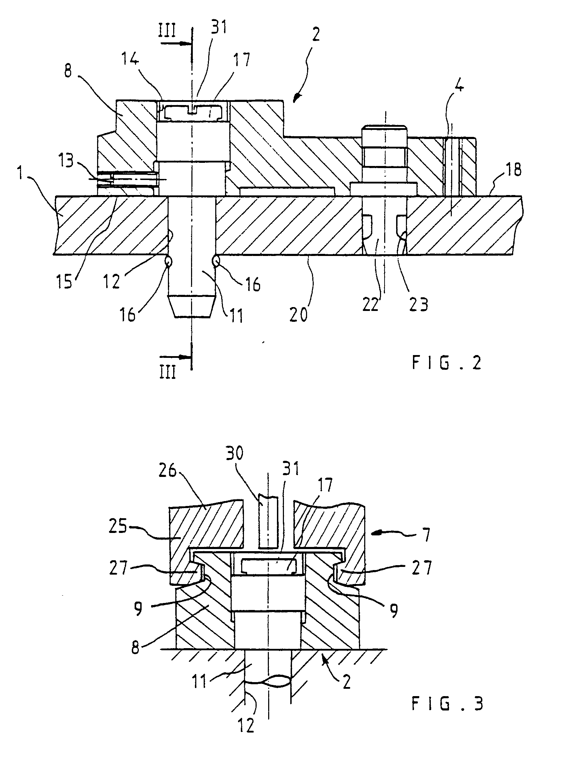

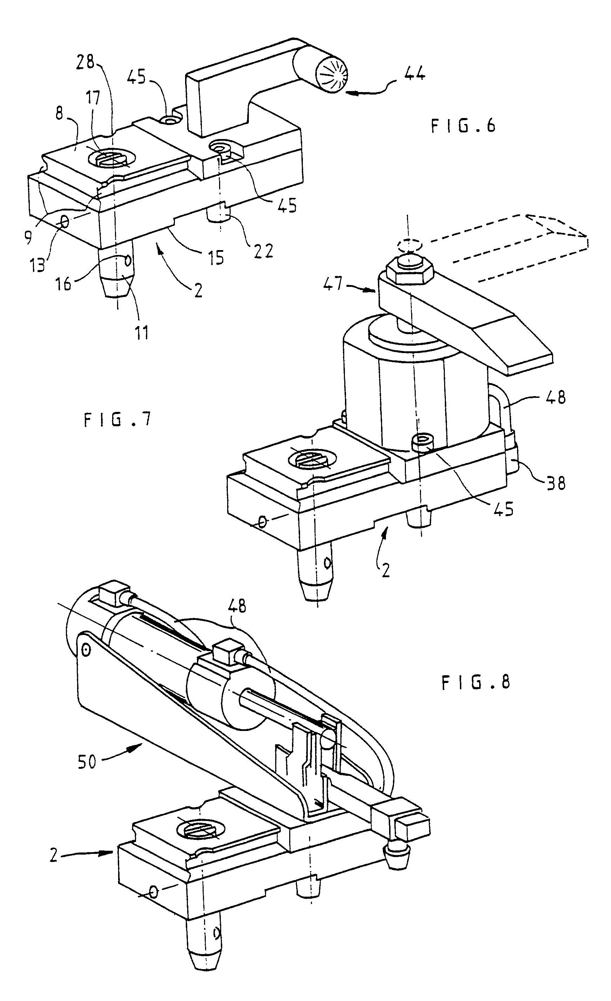

Elle comporte des moyens pour la solidarisation d'au moins un élément actif spécifique destiné au bridage proprement dit de la pièce. Diverses variantes de réalisation de l'élément actif seront illustrées et décrites en regard notamment des figures 6, 7 et 8. Ces moyens de solidarisation sont constitués par des trous taraudés 4 dans lesquels pénètrent des vis permettant la liaison d'un élément actif spécifique sur l'embase 2. Celle-ci comporte également des moyens 5, identiques pour toutes les embases 2, susceptibles de coopérer avec des moyens de préhension automatiques 7, illustrés partiellement en regard de la figure 3, en vue de rendre possible le transfert de chaque embase, par exemple d'un magasin de stockage audit support, et réciproquement.

Les moyens 5 sont constitués par une tête 8 d'embase conformée de manière à pouvoir être saisie et maintenue par les moyens de préhension automatiques 7.

Pour cela, deux rainures 9, parallèles entre elles, sont ménagées de part et d'autre de la tête 8 d'embase.

Le système comprend également des moyens de fixation amovible et automatique 10 permettant de fixer l'embase 2 au support 1. Dans une forme préférée de réalisation, l'embase 2 comporte une broche 11 susceptible de s'introduire dans un trou de passage 12 prévu dans le support. Le broche 11 est montée par vissage dans un perçage 14 pratiqué dans la tête 8 d'embase et débouchant de la face inférieure 15 de celle-ci. Une vis de blocage 13 maintient axialement la broche dans une position déterminée correspondant à une longueur de sortie de la broche en fonction de l'épaisseur du support.

Avantageusement, la broche 11 comporte des moyens de verrouillage-déverrouillage constitués, dans ce mode de réalisation, par des billes 16 logées dans la broche et par une tige 17 montée coulissante dans ladite broche, et coopérant avec les billes 16. La mise en place, puis le verrouillage de l'embase 2 dans le support 1 s'effectue de la façon suivante: après avoir introduit la broche 11 de l'embase dans le trou de passage 12 de façon que la face inférieure 15 de l'embase 2 vienne au contact de la face externe 18 du support 1, le verrouillage s'effectue en agissant sur la tige 17, laquelle écarte radialement les billes 16. Comme le montre la figure 2, ces dernières émergent de la broche pour venir au contact de la face interne 20 du support 1. L'embase se trouve alors verrouillée avec le support.

L'embase 2 comporte des moyens permettant de la positionner sur ledit support, notamment pour éviter sa rotation autour de l'axe de la broche 11, malgré le verrouillage. Pour cela, les moyens de positionnement sont constitués par un doigt d'indexage 22 susceptible de coopérer avec un trou de passage 23 prévu dans le support 1. Avantageusement, les trous de passage 12 et 23 sont de dimension identique. De ce fait, on peut introduire la broche et le doigt d'indexage aussi bien dans le trou 12 que dans le trou 23, et permettre ainsi diverses possibilités d'orientation de chaque embase par rapport au support.

Selon l'invention, les moyens de fixation amovible et automatique sont commandés par les moyens de préhension automatiques 7 tels que ceux illustrés partiellement et schématiquement sur la figure 3.

L'extrémité 25 d'un bras 26 issu d'un manipulateur ou robot comporte deux mors 27 susceptibles de saisir les deux rainures 9 pratiquées dans la tête 8 d'embase.

Le positionnement des mors 27 dans les rainures est assuré grâce à des encoches 28 agencées dans la tête 8, et dans lesquelles viennent coopérer des éléments complémentaires (non représentés) disposés dans les mors 27. Ainsi, le bras 26 du robot s'agence toujours dans une position déterminée et identique par rapport à chacune des embases 2. Avantageusement, un piston 30 est monté dans le bras 26 et permet d'agir sur la tige 17 montée dans la broche 11. De ce fait, le piston peut s'engager dans une fente 31 ménagée dans l'extrémité de la tige 17 et, ainsi, commander le verrouillage et/ou le déverrouillage de l'embase par rapport au support.

Ces moyens de préhension automatiques 7 préalablement programmés en fonction des séquences à réaliser, permettent donc d'automatiser le système de bridage de l'invention en assurant non seulement le transfert desdites embases mais également la fixation de celles-ci audit support.

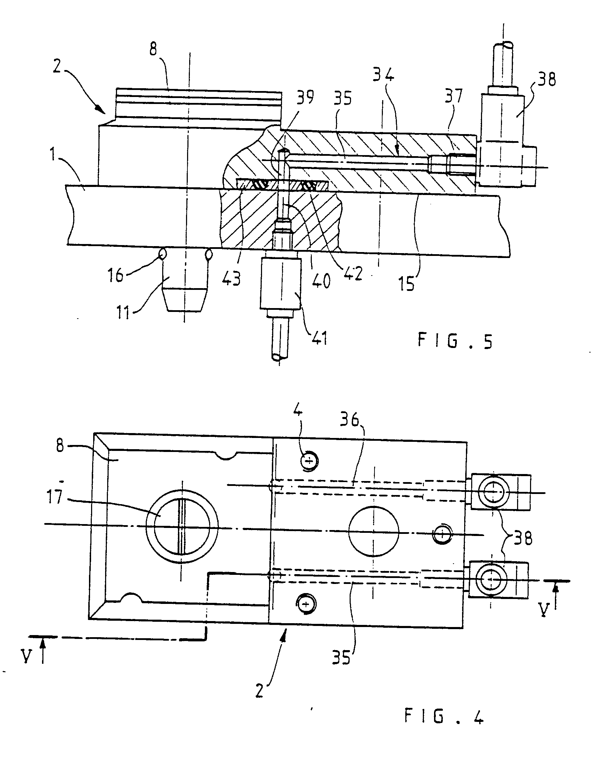

Comme le montrent les figures 4 et 5, il est prévu dans chaque embase des moyens de liaison 34 destinés à relier l'élément actif de bridage des pièces à des moyens de commande de cet élément, de façon que ce dernier puisse être commandé automatiquement à partir d'un pupitre de commande. Avantageusement, simultanément à la fixation de l'embase 2 audit support 1, est établie la connexion entre les moyens de commande et l'élément actif par l'intermédiaire des moyens de liaison 34.

Dans le cas de moyens de commande fluidique, par exemple du type pneumatique, deux canaux similaires 35 et 36, respectivement d'alimentation et de retour en fluide, sont prévus dans l'embase 2. Une première extrémité 37 de chaque canal 35 et 36 reçoit par exemple un raccord 38, tandis que la seconde extrémité 39 de chaque canal débouche de la face inférieure 15 de l'embase. Le support 1 comporte des orifices 40 sur lesquels sont raccordées des lignes de puissance 41 et/ou des conduites d'alimentation et de refoulement issues desdits moyens de commande. La connexion entre les extrémités 39 des canaux et les orifices correspondants 40 s'effectue avec étanchéité grâce à des joints toriques 42 montés dans une pièce 43 rapportée à l'embase 2.

Les moyens de commande peuvent être également de type électrique; pour cela, les embases sont équipées par exemple de fiches venant coopérer avec des fiches complémentaires solidaires du support 2.

Diverses variantes de réalisation, non limitatives, d'éléments actifs associés chacun à une embase sont illustrées en regard des figures 6, 7 et 8. Par exemple, figure 6, une touche sphérique latérale 44 pour le positionnement des pièces est montée solidaire de l'embase 2 par l'intermédiaire de vis de fixation 45 disposées dans les trous taraudés 4 pratiqués dans l'embase.

Dans ce cas précis, il n'est pas nécessaire que la touche sphérique latérale 44 soit commandée puisqu'elle sert uniquement de point d'appui ou de butée pour les pièces.

En revanche, figure 7, une bride pivotante 47 montée solidaire de l'embase 2 par les vis 45 est susceptible d'être actionnée par des moyens de commande. Des flexibles 48 relient alors les raccords 38 à l'élément actif dont la bride 47 peut occuper une première position, illustrée en traits continus, pour laquelle la bride maintient la pièce au support 1, et, une seconde position, illustrée en traits interrompus, pour laquelle la bride est effacée.

De même, figure 8, un vérin 50 ou analogue relié par des flexibles 48 aux raccords 38 vissés à l'embase 2 peut être actionné directement et automatiquement par les moyens de commande pneumatique, et venir brider, par exemple, un ensemble de pièces disposées l'une contre l'autre.

Le support 1 peut avoir une structure et une configuration particulières spécifiquement adaptées pour son utilisation dans les ateliers flexibles de fabrication pour les raisons évoquées au préalable.

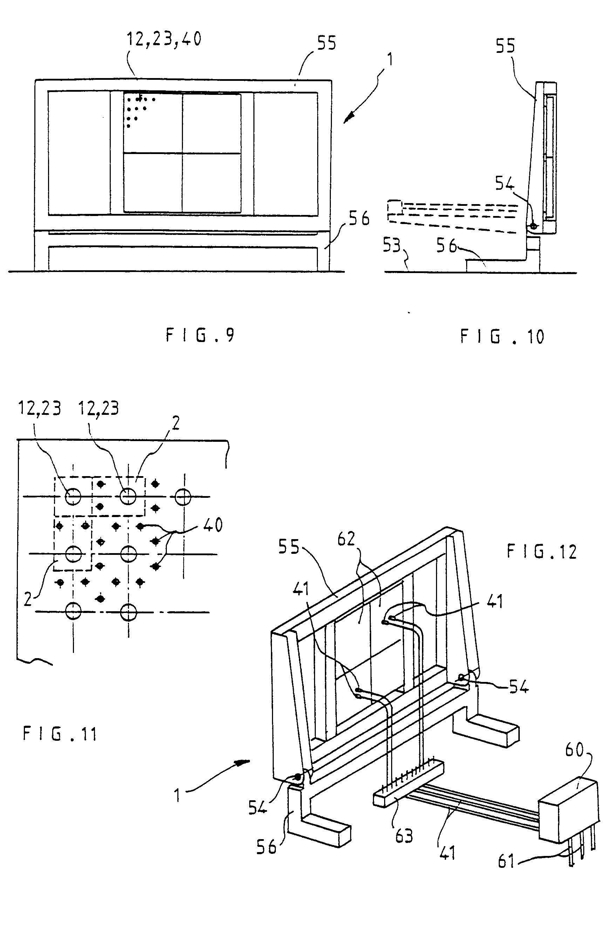

Ce support 1 (figures 9 et 10) est de préférence déplaçable par rapport au sol 53 grâce à des roulettes commandables non représentées, et, orientable par rapport à des axes 54 reliant la partie haute du support, ou table 55, à la partie basse, ou socle 56.

La table 55, sur laquelle sont susceptibles d'être agencées les embases ainsi que les conduites et lignes de puissance 41 issues des moyens de commande, comporte les trous de passage 12 et 23 relatifs respectivement aux broches 11 et aux doigts d'indexage 22, et les orifices 40 destinés aux conduites.

Les trous 12 et 23, de dimension identique, peuvent donc recevoir indifféremment les broches ou les doigts d'indexage, et permettre ainsi diverses possibilités d'orientation de l'embase sur le support. Quant aux orifices 40 leur emplacement est déterminé en fonction de celui des canaux 35 et 36 des embases 2, de façon que, lors de l'assemblage d'une embase, et ce quelle que soit sa position sur le support, les extrémités des canaux soient toujours en regard, avec étanchéité, des orifices 40.

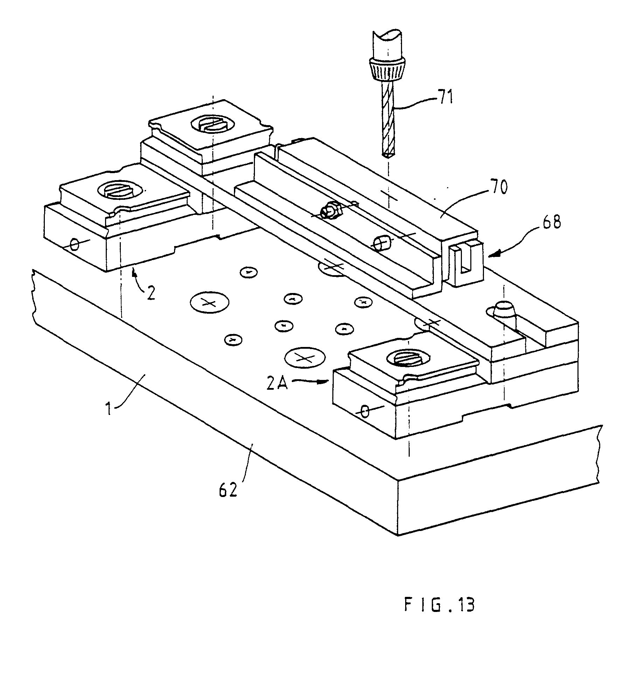

La figure 11 montre d'ailleurs l'agencement sous forme de matrice des trous de passage et des orifices, ainsi que les possibilités de montage d'une embase 2 représentée en traits pointillés.

Sur la figure 12, un pupitre de commande 60, relié à des sources de puissance, non représentées, par des liaisons 61, est raccordé au dos 62 de la table 55 ou partie haute du support 1 par les conduites ou lignes de puissance 41 à travers un répartiteur 63.

Dans une variante de réalisation, on peut prévoir des modules 66, par exemple au nombre de quatre, représentés sur les figures 9, 10 et 12, sur lesquels sont disposés une pluralité d'embases 2 portant chacune un élément actif spécifique. Ainsi, comme mentionné au préalable, on peut effectuer automatiquement des changements ou des transferts de modules sur lesquels ont été préalablement montés, en fonction des opérations contenues dans les gammes de fabrication des pièces, les embases et les éléments actifs sélectionnés.

Un exemple d'un montage particulier de réalisation d'une opération mécanique, montré figure 13, comporte deux embases 2 et 2A montées sur le support 1. Ces embases portent un dispositif 68 pour le maintien d'une pièce 70 dans laquelle on pratique des perçages par l'intermédiaire d'un foret 71. La conception et les dimensions de ce dispositif 68 restent évidemment liées aux types des pièces à usiner et/ou à assembler.

Ainsi, en aménageant, selon les opérations spécifiées dans les gammes de fabrication des pièces, des supports en fonction des postes de fabrication disposés dans l'atelier flexible de fabrication, en disposant dans un magasin de stockage les ensembles constitués d'embases identiques et d'éléments actifs spécifiques nécessaires au positionnement et/ou au bridage des pièces, et en programmant au moins un robot ou analogue destiné à assurer la prise, le transfert, et la fixation des ensembles d'un point à un autre de l'atelier, l'invention, telle que décrite ci-dessus, atteint l'objectif de pouvoir automatiser totalement les différentes interventions nécessaires au bridage des pièces.

Suivant les gammes de fabrication desdites pièces, l'automatisme réalise ainsi les systèmes de bridage pour les différentes phases d'usinage, d'assemblage, etc..., et effectue les transferts des systèmes d'un point à un autre de l'atelier.

**Revendications**

1. Système pour le bridage de pièces sur un support, comprenant une pluralité d'embases (2) destinées à être disposées entre ledit support (1) et au moins une desdites pièces, chaque embase (2) comportant des moyens (4) pour la solidarisation d'au moins un élément actif spécifique destiné au bridage de ladite pièce, et des moyens (5) identiques pour toutes lesdites embases et susceptibles de coopérer avec des moyens de préhension automatiques (7), en vue de rendre possible le transfert de chaque embase, des moyens de fixation amovible et automatique (10) étant prévus entre ledit support et lesdites embases, lesdits moyens de fixation amovible et automatique (10) comprenant au moins une broche (11) liée à chaque embase (2), susceptible des introduire dans un trou de passage (12) ménagé dans ledit support (1), ladite broche (11) comportant des moyens de verrouillage-déverrouillage de l'embase audit support, caractérisé en ce que lesdits moyens de verrouillage-déverrouillage comportent au moins une bille (16) logée dans ladite broche (11), et apte à être déplacée par une tige (17) montée coulissante dans ladite broche (11), grâce auxdits moyens de préhension automatiques (7) agissant sur ladite tige (17).

2. Système selon la revendication 1, caractérisé en ce que lesdits moyens (5) de chaque embase susceptibles de coopérer avec lesdits moyens de préhension automatiques sont constitués par une tête (8) d'embase, conformée de manière à pouvoir être saisie et maintenue par lesdits moyens de préhension automatiques.

3. Système selon la revendication 2, caractérisé en ce que ladite tête (8) d'embase comporte deux rainures (9) ménagées de part et d'autre de celle-ci, et dans lesquelles sont susceptibles de venir s'engager lesdits moyens de préhension automatiques (1).

4. Système selon l'une des revendications 1 à 3, caractérisé en ce que chaque embase (2) comporte, de plus, des moyens de positionnement de celle-ci sur ledit support (1).

5. Système selon la revendication 4, caractérisé en ce que lesdits moyens de positionnement de chaque embase sont constitués par un doigt d'indexage (22) susceptible de s'introduire dans un trou de passage (23) prévu dans ledit support (1).

6. Système selon la revendication 5, caractérisé en ce que lesdits trous de passage (12 et 23) prévus dans ledit support (1), et respectivement destinés à recevoir lesdites broches (11) et lesdits doigts d'indexage (22) desdites embases, sont de forme et de dimension identiques.

7. Système selon l'une quelconque des revendications précédentes, caractérisé en ce que lesdits éléments actifs spécifiques montés solidaires desdites embases (2) sont susceptibles d'être reliés à des moyens de commande (60) par l'intermédiaire de moyens de liaison (34) prévus dans lesdites embases.

8. Système selon la revendication 7, caractérisé en ce que, simultanément à la fixation de chaque embase (2) audit support (1), est établie la connexion, par lesdits moyens de liaison (34), entre lesdits moyens de commande et ledit élément actif spécifique.

9. Système selon l'une des revendications 7 ou 8, caractérisé en ce que lesdits moyens de liaison (34) prévus dans chaque embase comportent au moins un canal (35) destiné à relier au moins une ligne de puissance (41) issue desdits moyens de commande (60), et connectée à un orifice (40) ménagé dans ledit support (1), audit élément actif spécifique.

10. Installation pour la réalisation d'opérations sur des pièces, pourvue du système de bridage de pièces spécifié sous l'une quelconque des revendications précédentes et comportant une pluralité de supports (1), ainsi que lesdits moyens de préhension automatiques (7), caractérisée en ce qu'elle comporte des moyens de commande (60) desdits éléments actifs spécifiques, et des moyens de préhension automatiques (7) susceptibles de rendre possible le transfert desdites embases.

11. Installation selon la revendication 10, caractérisée en ce que lesdits moyens de préhension automatiques (7) commandent les moyens de fixation amovible et automatique (10).

12. Installation selon l'une quelconque des revendications 10 ou 11, caractérisée en ce que lesdits supports (1) sont déplaçables et orientables dans l'espace.

13. Installation selon l'une des revendications 10 à 12, caractérisée en ce que chaque support (1) est constitué de plusieurs modules (62) sur lesquels sont susceptibles d'être disposées des embases (2) portant des éléments actifs.

**Patentansprüche**

1. System zum Spannen von Werkstücken auf einer Auflage, bestehend aus mehreren Befestigungsflächen (2), die zwischen die Auflage (1) und zumindest einem der Werkstücke einzubringen sind, wobei jede Befestigungsfläche (2) Mittel (4) zum Befestigen zumindest eines spezifischen, zum Spannen des Werkstückes bestimmten aktiven Teils sowie Mittel (5) aufweist, die für alle Befestigungsflächen baugleich und in der Lage sind, mit den selbsttätigen Greifmitteln (7) im Hinblick darauf zusammenzuarbeiten, die Überführung jeder Befestigungsfläche möglich zu machen, und wobei die zwischen der Auflage und den Befestigungsflächen vorgesehenen abnehmbaren und selbsttätigen Halterungen (10) zumindest einen mit jeder Befestigungsfläche (2) verbundenen Dorn (11) aufweisen, der in ein in der Auflage ausgespartes Durchgangsloch (12) eingeführt werden kann und Einrichtungen zum Ver- und Entriegeln der Befestigungsfläche gegenüber der Auflage aufweist, dadurch gekennzeichnet, daß die Einrichtungen zum Ver- und Entriegeln zumindest eine kleine Kugel (16) aufweisen, die in dem Dorn (11) einsitzt und befähigt ist, kraft der auf den Schaft (17) wirkenden selbsttätigen Greifmittel (7) durch diesen im Dorn (11) gleitend eingesetzten Schaft (17) verschoben zu werden.

2. System nach Anspruch 1, dadurch gekennzeichnet, daß die Mittel (5) jeder mit den selbsttätigen Greifmitteln zusammenarbeitsfähigen Befestigungsfläche aus einem Befestigungsflächenkopf (8) bestehen, der derart ausgebildet ist, daß er von den selbsttätigen Greifmitteln ergriffen und gehalten werden kann.

3. System nach Anspruch 2, dadurch gekennzeichnet, daß der Befestigungsflächenkopf (8) zwei auf seinen beiden Seiten ausgesparte Rillen (9) aufweist, in die die selbsttätigen Greifmittel (7) zum Eingriff kommen können.

4. System nach einem der vorhergehenden Ansprüche 1 bis 3, dadurch gekennzeichnet, daß jede Befestigungsfläche (2) darüber hinaus auf der Auflage (1) über ihre eigene Positionierungseinrichtung verfügt.

5. System nach Anspruch 4, dadurch gekennzeichnet, daß die Positionierungseinrichtung jeder Befestigungsfläche aus einem Indexierungsfinger (22) besteht, der in ein in der Auflage (1) vorgesehenes Durchgangsloch (23) eingeführt werden kann.

6. System nach Anspruch 5, dadurch gekennzeichnet, daß die in der Auflage (1) vorgesehenen und jeweils zur Aufnahme der Dorne (11) sowie der Indexierungsfinger (22) der Befestigungsflächen bestimmten Durchgangslöcher (12 und 23) ihrer Form und Abmessung nach baugleich sind.

7. System nach einem der vorhergehenden Ansprüche 1 bis 6, dadurch gekennzeichnet, daß die spezifischen, mit den Befestigungsflächen (2) fest verbundenen aktiven Teile über in den Befestigungsflächen vorgesehene Verbindungseinrichtungen (34) mit einer Steuer- oder Regeleinrichtung (60) verbunden werden können.

8. System nach Anspruch 7, dadurch gekennzeichnet, daß gleichzeitig mit der Festlegung jeder Befestigungsfläche (2) gegenüber der Auflage (1) durch die Verbindungseinrichtungen (34) die Verbindung zwischen der Regel- oder Steuereinrichtung und dem spezifischen aktiven Teil hergestellt wird.

9. System nach einem der vorhergehenden Ansprüche 7 oder 8, dadurch gekennzeichnet, daß die in jeder Befestigungsfläche vorgesehenen Verbindungseinrichtungen zumindest einen Kanal (35) aufweisen, an den zumindest eine von der Regel- oder Steuereinrichtung (60) hergeführte und mit einer in der Auflage (1) ausgesparten Öffnung (4) verbundene Kraftleitung (60) an den spezifischen aktiven Teil angeschlossen werden soll.

10. Anlage zur Durchführung von Bearbeitungsabläufen an Werkstücken, die mit einem durch einen der vorhergehenden Ansprüche 1 bis 9 vorgeschriebenen System ausgestattet ist und mehrere Auflagen (1) sowie die angeführten selbsttätigen Greifmittel (7) aufweist, gekenzeichnet durch Regel- oder Steuereinrichtungen (60) der spezifischen aktiven Teile sowie durch selbsttätige Greifmittel (7), durch die die Überführung der Befestigungsflächen ermöglicht wird.

11. Anlage nach Anspruch 10, dadurch gekennzeichnet, daß die abnehmbaren und selbsttätigen Halterungen (10) von den selbsttätigen Greifmitteln (7) geregelt oder gesteuert werden.

12. Anlage nach einem der vorhergehenden Ansprüche 10 oder 11, dadurch gekennzeichnet, daß die Auflagen (1) im Raum versetzbar und ausrichtbar sind.

13. Anlage nach einem der vorhergehenden Ansprüche 10 bis 12, dadurch gekennzeichnet, daß jede Auflage (1) aus mehreren Modulen (62) gebildet ist, auf denen die die aktiven Teile tragenden Befestigungsflächen (2) eingerichtet werden können.

**Claims**

1. System for clamping workpieces on a support, comprising a plurality of bases (2) intended to be disposed between said support (1) and at least one of said workpieces, each base (2) comprising means (4) for the connection of at least one specific active element intended to clamp said workpiece, and means (5) identical for all bases and able to cooperate with automatic gripping means (7) in view of making the transfer of each base possible, automatic and removable fixation means (10) being provided between said support and said bases, said automatic and removable fixation means (10) comprising at least one pin (11) connected to each base (2), able to be introduced into a passage hole (12) formed in said support (1), said pin (11) comprising means for locking-unlocking the base to/from said support, characterized in that said locking-unlocking means comprise at least one ball (16) housed in said pin (11) and able to be displaced by a rod (17) slidably mounted in said pin (11), by means of said automatic gripping means (7) acting on said rod (17).

2. System according to claim 1, characterized in that said means (5) of each base able to cooperate with said automatic gripping means consist of a base head (8) shaped so as to be gripped and held by said automatic gripping means.

3. System according to claim 2, characterized in that said base head (8) comprises two grooves (9) provided on both sides thereof, and whereinto said automatic gripping means (7) are able to fit.

4. System according to one of claims 1 to 3, characterized in that each base (2) further comprises means for positioning the latter on said support (1).

5. System according to claim 4, characterized in that said means for positioning each base consist of an index finger (22) able to be introduced into a passage hole (23) provided in said support (1).

6. System according to claim 5, characterized in that said passage holes (12 and 23) provided in said support (1), and respectively intended to receive said pins (11) and said index fingers (22) of said bases, have the same shape and dimension.

7. System according to any one of the preceding claims, characterized in that said specific active elements solid with said bases (2) are able to be connected to control means (60) via connecting means (34) provided in said bases.

8. System according to claim 7, characterized in that, at the same time each base (2) is fixed to said support (1), the connection is established, by said connecting means (34), between said control means and said specific active element.

9. System according to one of claims 7 or 8, characterized in that said connecting means (34) provided in each base comprise at least one channel (35) intended to connect at least one power line (41), coming from said control means (60) and connected to an orifice (40) formed in said support (1), to said specific active element.

10. Installation for carrying out operations on workpieces, provided with the system for clamping workpieces specified under any one of the preceding claims and comprising a plurality of supports (1), as well as said automatic gripping means (7), characterized in that it comprises means (60) for controlling said specific active elements and automatic gripping means (7) able to make the transfer of said bases possible.

11. Installation according to claim 10, characterized in that said automatic gripping means (7) control the automatic and removable fixation means (10).

12. Installation according to any one of claims 10 or 11, characterized in that said supports (1) can be displaced and oriented in space.

13. Installation according to one of claims 10 to 12, characterized in that each support (1) consists of several modules (62) on which bases (2) carrying active elements are able to be disposed.

FIG.1

EP 0 267 117 B1

FIG.2

FIG.3

FIG.5

FIG.4

FIG.6

FIG.7

FIG.8

12,23,40    55         55

1

54

56

53    56

F I G . 9                    F I G . 10

12,23   12,23

2

40

2

F I G . 11

55    62        F I G . 12

41

41

54

1

54

60

56

63    41    61

FIG.13